# EUROPEAN PATENT SPECIFICATION

(11) **EP 3 152 176 B1**
(45) Date of publication and mention of the grant of the patent: **05.08.2020**
(21) Application number: 15732980.6
(22) Date of filing: 05.06.2015
(51) Int. Cl.: C04B 7/24, C04B 12/00, C04B 28/00, C04B 7/153

(54) **METHOD FOR THE PRODUCTION OF A CEMENT COMPOUND**
VERFAHREN ZUR HERSTELLUNG VON EINER ZEMENTZUSAMMENSETZUNG
PROCÉDÉ DE PRODUCTION D'UN COMPOSÉ DE CIMENT

(30) Priority: 06.06.2014 NL 2012959
(43) Date of publication of application: 12.04.2017
(73) Proprietor: Ascem B.v., 6991 GV Rheden (NL)
(72) Inventor: BUCHWALD, Anja, NL-6991 GV Rheden (NL); WIERCX, Johannes Albertus Louis Marie, NL-6991 GV Rheden (NL); VAN MELICK, Bart Johannes Wilhelmus Maria, NL-6991 GV Rheden (NL)
(74) Representative: Algemeen Octrooi- en Merkenbureau B.V.
(86) International application number: PCT/NL2015/050410
(87) International publication number: WO 2015/187022

(56) References cited:
- EP-A1- 0 393 731
- WO-A1-03/099738
- NL-C2- 1 001 242
- F. PUERTAS ET AL: "Mineralogical and microstructural characterisation of alkali-activated fly ash/slag pastes", CEMENT AND CONCRETE COMPOSITES, vol. 25, no. 3, 1 April 2003 (2003-04-01), pages 287-292, XP055219033, GB ISSN: 0958-9465, DOI: 10.1016/S0958-9465(02)00059-8
- DATABASE EPODOC [Online] EUROPEAN PATENT OFFICE, THE HAGUE, NL; 25 August 2003 (2003-08-25), XP002746347, Database accession no. KR-20020008312-A -& KR 2003 0068720 A (BASIC MATERIALS CORP [KR]) 25 August 2003 (2003-08-25)
- PACHECO-TORGAL F ET AL: "Alkali-activated binders: A review", CONSTRUCTION AND BUILDING MATERIALS, vol. 22, no. 7, 1 July 2008 (2008-07-01), pages 1305-1314, XP022654989, ELSEVIER, NETHERLANDS ISSN: 0950-0618, DOI: 10.1016/J.CONBUILDMAT.2007.10.015 [retrieved on 2007-11-26]

## Description

The present invention relates to a method for producing a cement compound. More in particular, the present invention relates to a method for producing a cement compound comprising at least a reactive glass compound, an alkaline activator and a filler, and optionally additives, said reactive glass compound comprising at least 35 wt% CaO, at least 25 wt% SiO₂ and at least 10 wt% Al₂O₃, and optionally also other oxides.

Such a cement compound and a method for preparing it is known per se from NL1001242, which document relates to the preparation of a cement raw material by melting waste products with an inorganic component under reducing conditions so that zinc is volatilised and the iron oxide fraction in the slag is kept between 0.5 and 10% m/mm at temperatures above the melting temperature of the produced slag, the slag compound containing calcium oxide (CaO), aluminium oxide (Al₂O₃) and silicon dioxide (SiO₂) as its main components, plus a maximum of 25% m/m other oxides and sulphides, optionally adjusting the composition by adding mineral raw materials, shock-cooling the produced slag to obtain an amorphous glassy mass, grinding it and using it as cement in a mixture containing activator and/or gypsum or plaster. Portland cement or calcium is used as the activator, while the gypsum is to be regarded as calcium sulphate.

Known from the German Offenlegungsschrift DE 26 11 889 is a method for preparing binders by using for example blast-furnace slag, the blast-furnace slag being melted under oxidising conditions together with calcium in a weight ratio of 60-90% blast-furnace slag and 40-10% calcium, after which the melt is cooled so that finally the granulate is ground together with 3-8 wt% gypsum, relative to the total amount, where the gypsum is to be regarded as calcium sulphate.

European patent application EP 0 393 731 relates to a process for preparing a powdery substance with hydraulic binding properties, based on a material containing CaO, SiO₂ and Al₂O₃, said material being melted in a vessel at a temperature of between 1400°C and 1550°C, while adding said compounds or other compounds if desired, so that the result is a melt being composed of 33 - 52 m% of CaO, 9 - 25 m% of Al₂O₃ and 23 - 45 m% of SiO₂, said melt being tapped, cooled and refined, wherein the tapped melt is cooled by leading it through the rolls of a roll cooler (calender) until a temperature of between 500°C and 1000°C is reached, after which the solidified mass is broken and further cooled with air and whereby the heated cooling air is utilized. As an activating substance, which by itself is indispensable and is added if desired, a substance having an alkaline reaction is utilized, such as NaOH, Ca(OH)₂ and the like.

An article of F. Puertas et. Al: "Mineralogical and microstructural characterisation of alkali-activated fly ash/slag pastes", CEMENT AND CONCRETE COMPOSITES, vol. 25, no. 3, 1 April 2003 (2003-04-01), pages 287-292, relates to a mechanical, mineralogical and microstructural characterization of the cement pastes obtained by alkaline activation of fly ash/ slag mixtures cured at different temperatures. In a chemical composition of Spanish fly ash and blast furnace slag NaOH was used as activator.

International application WO 03/099738 relates to a geopolymeric binder or cement comprising an amorphous vitreous matrix embedding mellilite particles, aluminosilicate particles and quartz particles, that is obtained by hardening a reactive mixture comprising: a residual rock from a strongly weathered granitic type in which the kaolinization is far advanced, calcium mellilite glass in which the glass part is higher than 70% by weight, and a soluble alkaline silicate in which the molar ratio (Na, K)₂O:SiO₂ ranges between 0.5 and 0.8.

Korean patent application KR20030068720 relates to an inorganic binder composition comprising 40-75 wt% of cement; 10-20 wet% of an admixture; and 10-25 wt% of an alkaline reaction activator selected from the group consisting of a sodium-based compound, a potassium-based compound, a calcium-based compound comprising, and water glass.

Cement is a binder that, by reacting with water, acts as a binder for mortar and concrete, fibre-reinforced products and other applications requiring long-term binding. Known types of cement consist largely of calcium silicate and, when mixed with water, form a plastic mass that can be easily applied to materials. Cement subsequently hardens in a chemical reaction, with its compressive strength increasing with time until the hardening is complete. In the hardening the material becomes less porous.

Various types of cement have been standardised according to EN 197; they are referred to as CEM I to CEM V, having Portland cement clinker concentrations between 95% (CEM I) and 5% (CEM III/C), the rest being supplemented with blast-furnace slag, pozzolana and/or inert fillers. Portland cement clinker is made from marl limestone.

Cements are classified according to EN 197 on the basis of the compressive strength measured after a period of 28 days (32.5 MPa; 42.5 MPa and 52.5 MPa), the classes varying from cement with a low initial strength after 2 days (slow-hardening cement) to cement with a high initial strength after 2 days (fast-hardening cement). Cements with a high initial strength are needed for the production of, say, prefab concrete elements.

One aspect of Portland cement is that large amounts of CO₂ are released during its production, partly as a result of heating to high temperatures, but mostly because the raw material - limestone - has to be calcined, which means that the addition of heat causes the original mineral CaCO₃ to separate into CaO and CO₂.

Portland cements are suitable for general use, but are less suitable for applications in which the concrete product comes into contact with acids. In such applications the concrete will have a shorter life. Secondary raw materials are waste materials, for example waste produced in industrial processes such as blast-furnace slag and fly ash, whose composition makes them suitable for the production of cement. Primary raw materials are purer than secondary raw materials, as a result of which cement compounds based on primary raw materials are more reproducible.

An alternative for Portland cement are alkali-activated cements, also known as geopolymers. They are based on a reactive solid substance that hardens under the influence of an alkaline activator.

One aspect of known alkali-activated cements or geopolymers is that it is difficult to realise a constant quality because of the varying quality and composition of the raw materials. This is a problem in particular when secondary raw materials are used.

Another aspect of the present invention is to provide a cement compound that exhibits a rapid increase in strength and, in particular, has a high initial strength.

The present invention relates to a method for producing a cement compound according to the wording of claim 1.

The present inventors have found that a good initial strength is obtained with such a cement compound, in particular in combination with a compressive strength after 28 days' hardening of at least 30 MPa measured according to EN197.

The quality of the present cement compound is reproducible, in spite of the fact that secondary raw materials are used for the reactive glass compound. The cement compound has a relatively high initial strength, making it particularly suitable for use in the production of prefab concrete elements. The reactive glass compound is produced separately for the production of the cement compound. The glass compound is obtained largely or entirely from secondary raw materials, but may optionally consist of a mixture comprising relatively small amounts of primary raw materials or purified raw material. The reactive glass compound is the compound which, after the addition of alkaline activator and water, undergoes a chemical reaction that results in the hardening of the cement. The filler may affect chemical, physical and mechanical properties of the cement either before or after the hardening, but it is not essential for the hardening process.

The term "alkaline activator" is understood to mean substances that activate or initiate the hardening process of the reactive glass compound after it has been mixed with water. If the alkaline activator is omitted, the hardening process under the influence of water will proceed much slower, resulting in a lower compressive strength measured after 28 days.

The cement compound produced by the method according to the present application comprises 10-70 wt% reactive glass compound; 10-70 wt% filler; 1-20 wt% alkaline activator and optionally 0.5-10 wt% additives, said wt% being based on the total weight of said cement compound.

After hardening for 28 days the cement compound should preferably have a compressive strength of at least 32.5 MPa (according to EN197). EN197 is the European standard for cement in which e.g. the specifications of different strength classes are defined for cement, e.g. implemented by the Dutch Standardisation Institute NEN. Here use is made of version NEN-EN 197-1:2011 (Cement - Part 1: Composition, specifications and conformity criteria for common cements).

It is advantageous for the reactive glass compound to comprise 35-50 wt% CaO, 25-45 wt% SiO₂ and 10-25 wt% Al₂O₃, and optionally other oxides, preferably 40-45 wt% CaO, 28-35 wt% SiO₂ and 13-20 wt% Al₂O₃, said wt% being based on the total weight of said reactive glass compound.

It is favourable for the weight of the one or more secondary raw materials from which the reactive glass compound is obtained to be at least half of the total mass of the glass compound. That way effective use is made of the secondary raw materials and savings are realised on relatively expensive primary raw materials. The one or more secondary raw materials are preferably selected from the group consisting of:
- ashes (fly ash and soil ash) released in the combustion of coal (e.g. pit coal or brown coal), wood, biomass, rice waste, paper sludge, waste;
- substances released in the recycling of concrete and concrete products, cement-bound fibre plates, glass wool, rockwool;
- filter substances from rock processing, cement production or lime production;
- residual substances from the metal industry, in particular slag, more in particular blast-furnace slag;
- residual substances from the paper industry;
- residual substances from the purification of (drinking or sewage) water;
- thermally treated soil or sludge;
- residual substances from the recovery of primary raw materials such as bauxite, brick clay and corundum;
or mixtures thereof.

According to the invention the alkaline activator is used in a combination of at least two alkaline activators, which combinations are selected from the group consisting of Na₂CO₃ and Ca(OH)₂; Na₂CO₃ and CEM I; Na₂CO₃ and Ba(OH)₂; Na₂CO₃ and belite cement; K₂CO₃ and Ca(OH)₂; K₂CO₃ and CEM I; K₂CO₃ and Ba(OH)₂; K₂CO₃ and belite cement; Na₂SO₄ and Ca(OH)₂; Na₂SO₄ and CEM I; Na₂SO₄ and Ba(OH)₂; Na₂SO₄ and belite cement; K₂SO₄ and Ca(OH)₂; K₂SO₄ and CEM I; K₂SO₄ and Ba(OH)₂; K₂SO₄ and belite cement.

In particular, the alkaline activator is to be selected from at least one of Na₂CO₃, K₂CO₃, Na₂SO₄ and K₂SO₄ in combination with at least one of Ca(OH)₂, CEM I, Ba(OH)₂ and belite cement.

The additive is preferably selected from the group consisting of Ca(OH)₂, Ba(OH)₂, CaCl₂; BaCl₂, polyphosphate and tartrate, or combinations thereof.

The filler is preferably selected from the group consisting of filter substances: fly ash, in particular pulverised coal fly ash; microsilica; crushing waste and stone powder; thermally activated clay or sludge; residual substances from the metal industry, in particular slag, more in particular blast-furnace slag, and pozzolana, or a combination hereof.

The filler and the one or more secondary raw materials preferably derive from the same source. This makes it logistically easier to produce cement and reduces the number of quality inspections and chemical analyses of the ingredients to be used.

The present method makes it possible to produce a cement compound of reproducible quality, in spite of the use of secondary raw materials.

The raw materials may be supplied in different forms; it may be advantageous to pretreat them, for example through grinding, granulation, compression or pelleting.

Various known melt aggregates can be used for the heating in sub-steps a), b) or c), optionally in combination with a preheater and/or a calciner. In the glass industry, natural gas or petroleum oil is usually used as fuel for the heating facilities, in combination with air or pure oxygen. It may be necessary to granulate the raw materials, depending on the type of furnace used.

During the optional calcining prior to the melting, fuel is added to the raw materials, causing the temperature to rise to 800°C. CO₂ is then released, in particular in the chemical conversion of calcium carbonate to calcium oxide. This process step calls for a relatively large amount of energy, and it depends on the raw materials whether calcining is necessary.

The thermal treatment according to step b) involves preheating to 600-800°C. This is optionally followed by calcining. The temperature is then raised to above the composition's melting point, for example to 1200-1500°C, after which the molten glass can be collected from the furnace in a liquid form for further processing.

The molten glass is first cooled to a solid substance. This may take place in the open air or with the aid of water or other cooling agents. The cooling rate has an influence on the properties of the glass ultimately obtained. The solidified reactive glass compound can then be processed, for example by grinding, to obtain a granule size that can be better handled and dosed. The reactive glass compound can subsequently be mixed with the other ingredients of the cement compound.

The one or more corrective substances are preferably selected from the group comprising calcium oxides, calcium carbonates, silicon oxides and aluminium oxides. These corrective substances make it relatively simple to obtain the desired composition.

Preferably solid fuel, in particular organic solid fuel, more in particular brown coal, pit coal or biomass, is used as the fuel for carrying out step i). Surprisingly, such fuels prove to perform satisfactorily as a source of heat for the process.

In a preferred embodiment the thermal treatment in sub-step b) is concluded with the thermal quenching of the reactive glass compound. Thermal quenching' is understood to mean the forced cooling of the glass compound formed in sub-step b), for example by introducing the glass compound into a colder medium (water, air). Fast cooling results in a higher percentage of glassy character. By quenching, the temperature of liquid glass with a temperature of above 1000°C can for example be lowered to less than 100°C within a few minutes. Preferably, the obtained glassy character is 60 wt %, based on the total reactive glass compound, more preferably more than 96 wt%.

The invention also comprises a method for processing a cement compound according to the invention, comprising mixing the cement compound with water, in which the alkaline activator is optionally added only after the mixing of the reactive glass compound, the filler and optional additives. This makes it easier to realise the hardening under controlled conditions. Such a method can be facilitated by packing the alkaline activator separate from the other ingredients, for example in a separate compartment of the packaging, or a separate sub-packaging.

The separate packing also makes the cement compound less susceptible to unintentional exposure to water during transport or storage. Packing the entire compound in a single packaging on the contrary implies the advantage that the alkaline activator will in that case already be effectively mixed with the other ingredients for a homogeneous hardening.

The invention will now be elucidated with reference to the following non-limitative examples.

### Example 1: production of glass

A number of glass compounds for use in a cement compound were produced on the basis of the method described here.

**Table 1: raw material compounds for the production of reactive glass**

| Batch | 1 | 2 |
|---|---|---|
| fly ash | 47.5% | 35.3% |
| limestone | 52.5% | 58.8% |
| aluminium oxide correction | - | 5.9% |

Two different mixtures of fly ash and limestone were produced, as shown in Table 1. On the basis of the element analysis of the fly ash, 5.9 wt% aluminium oxide was added to the second batch as a corrective substance. The percentages are based on the total glass compound.

The compound was processed into glass according to the invention. The raw materials were ground into granules and mixed. In a first step the mixture was preheated and calcined to 800°C in a preheater and calciner. In a subsequent step the mixture was further heated to 1450°C, resulting in a molten glass. The molten glass mixture was quickly cooled in water or air (quenched). X-ray diffraction showed that the reactive glass obtained had around 98% glass character. Table 2 shows the composition of the obtained glass on the basis of X-Ray Fluorescence analysis (XRF). XRF is a well-known method for the analysis of solid substances, and was used according to NEN-EN 15309:2007, "Characterisation of waste and soil - Determination of elemental composition by X-ray fluorescence". The method for determining the glass content is described in for example T. Westphal, T. Füllmann, H. Pöllmann, Rietveld quantification of amorphous portions an internal standard-mathematical consequences of the experimental approach, Powder Diffract. 24 (2009) 239-243. The measurements were carried out using a Seifert XRD 3003 TT, with ZnO as the internal standard reference.

**Table 2: reactive glass compounds**

| Batch | g1 | g2 |
|---|---|---|
| SiO₂ | 33.6% | 26.4% |
| Al₂O₃ | 14.4% | 19.0% |
| CaO | 40.0% | 45.0% |
| other oxides | 12.0% | 9.6% |

The ratio of the mass of the secondary raw material (fly ash in this case) and the glass mass was 0.63 in the case of batch g1 and 0.50 in the case of batch g2.

The same method was used to prepare some more batches, whose results are presented in table 3. The chemical composition was determined with the aid of XRF, the average particle size with the aid of laser granulometry using an HORIBA LA-300 Particle Analyzer in water. Laser granulometry is a well-known method for determining average particle sizes.

**Table 3: Composition (mass %) and average particle size of the glass (µm)**

| Batch | g3 | g4 | g5 | g6 | g7 |
|---|---|---|---|---|---|
| CaO | 42.0 | 39,8 | 41.1 | 48.0 | 43.0 |
| SiO₂ | 36.3 | 31,5 | 32.4 | 31.0 | 32.0 |
| Al₂O₃ | 14.5 | 18.1 | 18 | 18.9 | 14.3 |
| Fe₂O₃ | 1.4 | 3.7 | 1.5 | 0.35 | 1.72 |
| MgO | 1.5 | 2.1 | 2.3 | 0.48 | 2.43 |
| K₂O | 2.0 | 1.3 | 1.3 | 0.2 | 0.47 |
| Na₂O | 0.6 | 0.8 | 1.5 | 0.03 | 0.11 |
| other oxides | 1.7 | 2.7 | 1.9 | 0.7 | 1.5 |
| d50 [µm] | 8.5 | 8.0 | 7.6 | 9.0 | 7.5 |

### Example 2: Cement compounds

The following cement compounds were prepared on the basis of the glass compounds described above.

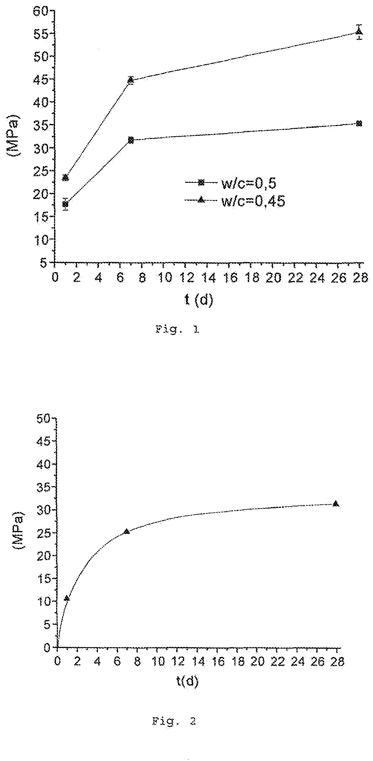

Cement compound c1 was prepared using 44 wt% glass compound g5, 44 wt% fly ash as filler and a combination of 7% Na₂CO₃ and 5% Ca(OH)₂ as alkaline activator. Other additives could optionally be added to this compound. In 3 tests mortars were prepared using the cement in different cement/water ratios. The water/cement (w/c) ratios were 0.5, 0.45 and 0.4, respectively, with 0.05 wt% tartaric acid, based on the cement, being added to the water for the last batch. The compressive strength of the cement was then measured at different times for 28 days according to EN196, using a press suitable for that purpose. Figure 1 shows the development of the compressive strength as measured according to EN196. After 28 days the cement with w/c= 0.45 showed the greatest compressive strength, of 55 MPa. This makes this cement particularly suitable for applications demanding a cement that hardens relatively quickly, such as prefab concrete products. The testing of compressive strength is described in NEN-EN 196-1:2005 (Methods of testing cement - Part 1: Determination of strength). The strength is determined using a mortar sample with a defined sand/cement ratio and wcf of 0.5 for the classification as standard strength. The compressive strength is measured using a press (Form+Test Type 506/100/10 D-S).

Cement compound c2 was prepared using 49 wt% glass compound g5, 49 wt% fly ash and 3% NaOH as the activator. Filler and other additives could optionally be added to this compound. This cement compound was mixed 1:1 with water. Figure 2 shows the development of the compressive strength, measured according to EN196.

### Example 3

In example 3 a number of cement compounds according to NL1001242 were prepared and compared with cement compounds according to the present invention.

The following Table 4 shows the compounds of examples 1-4 according to NL1001242.

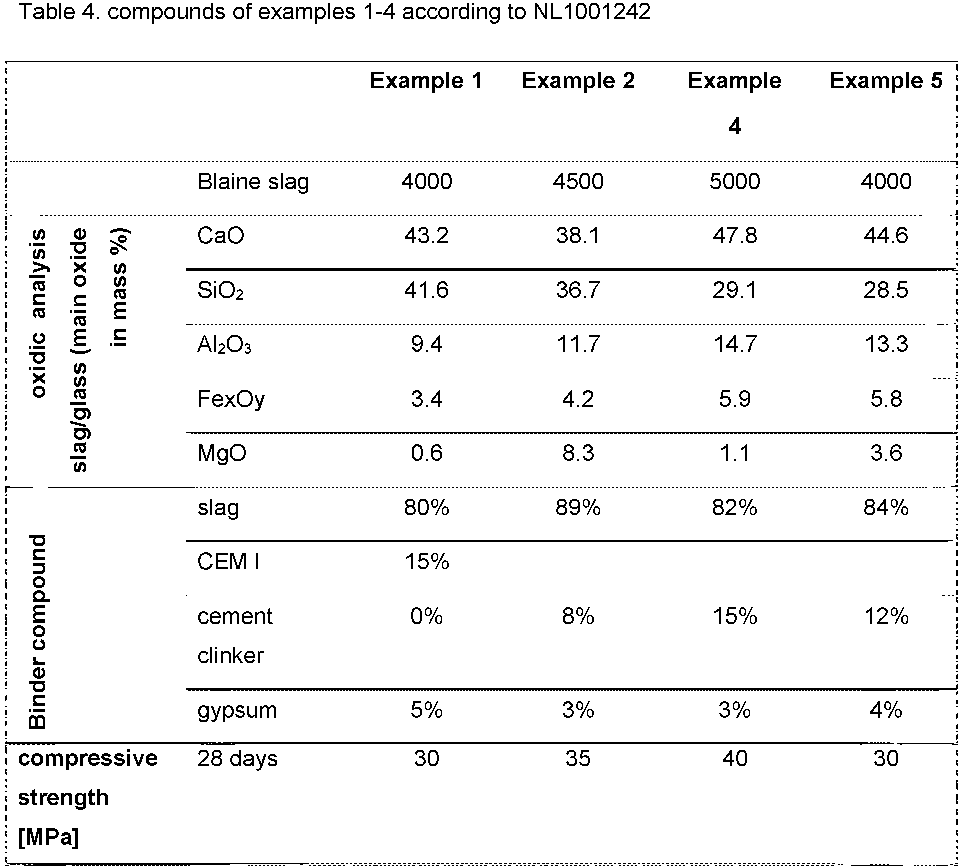

Compounds were prepared for examples 2 and 4 of NL1001242, i.e. compounds 728 and 730, so as to be able to determine the initial strength, which values in NL1001242 are not mentioned for examples 2 and 4 of NL1001242. The results are shown in Table 5.

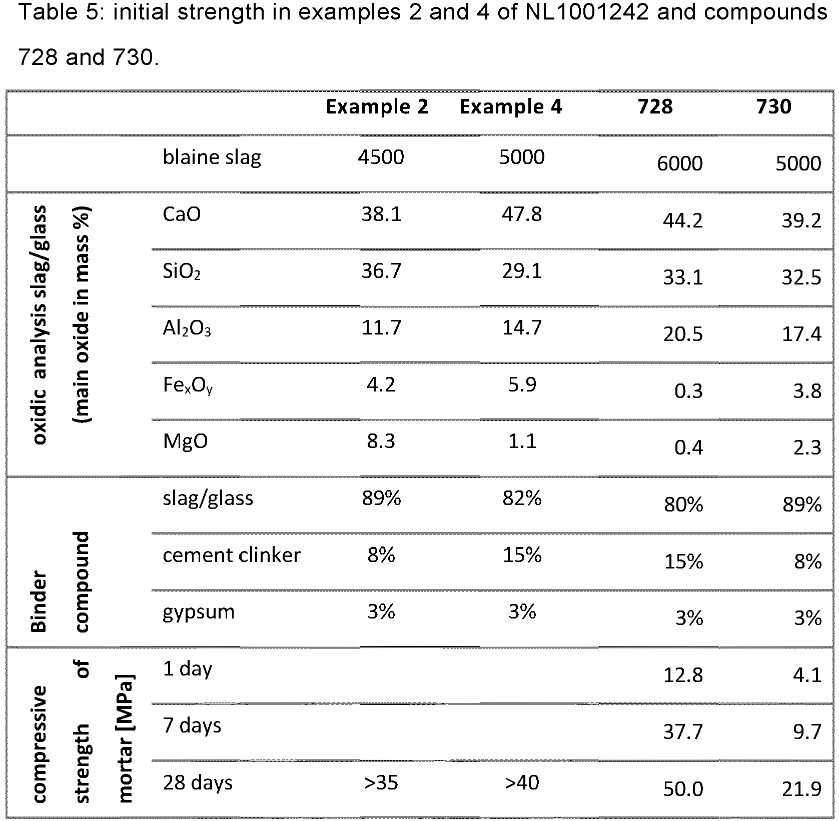

Surprisingly, it was found that good compressive strengths can be obtained even with 50% of the employed slag and replacement of it with less reactive or non-reactive filler (here fly ash), as shown in Table 6.

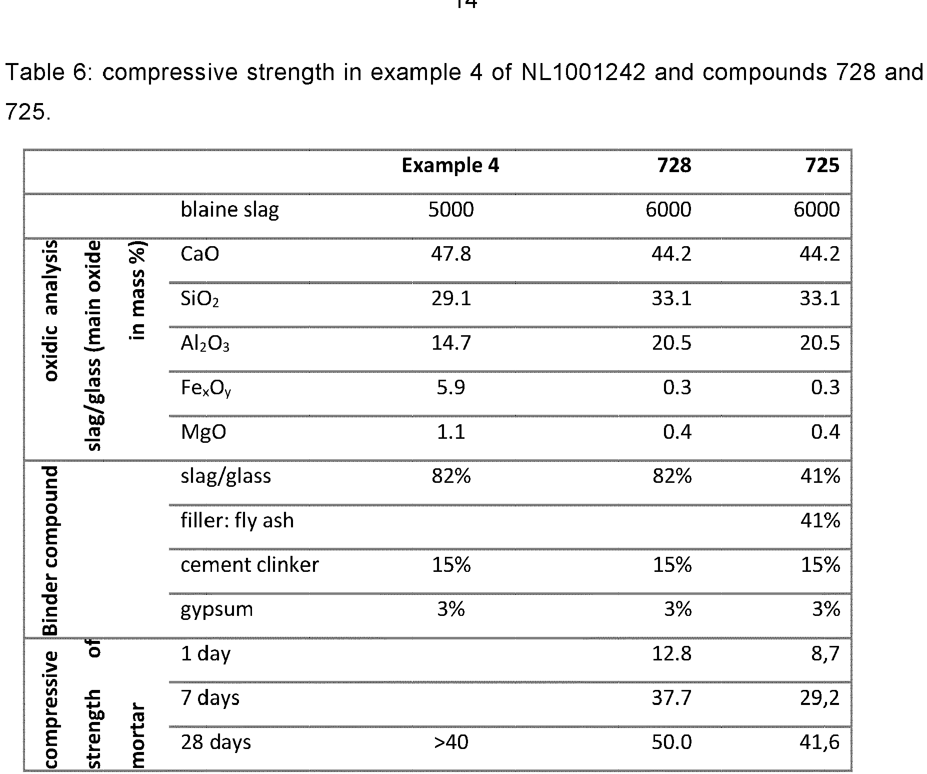

The following Table 7 shows the influence of the replacement of slag/glass by a mixture of slag/glass and fly ash.

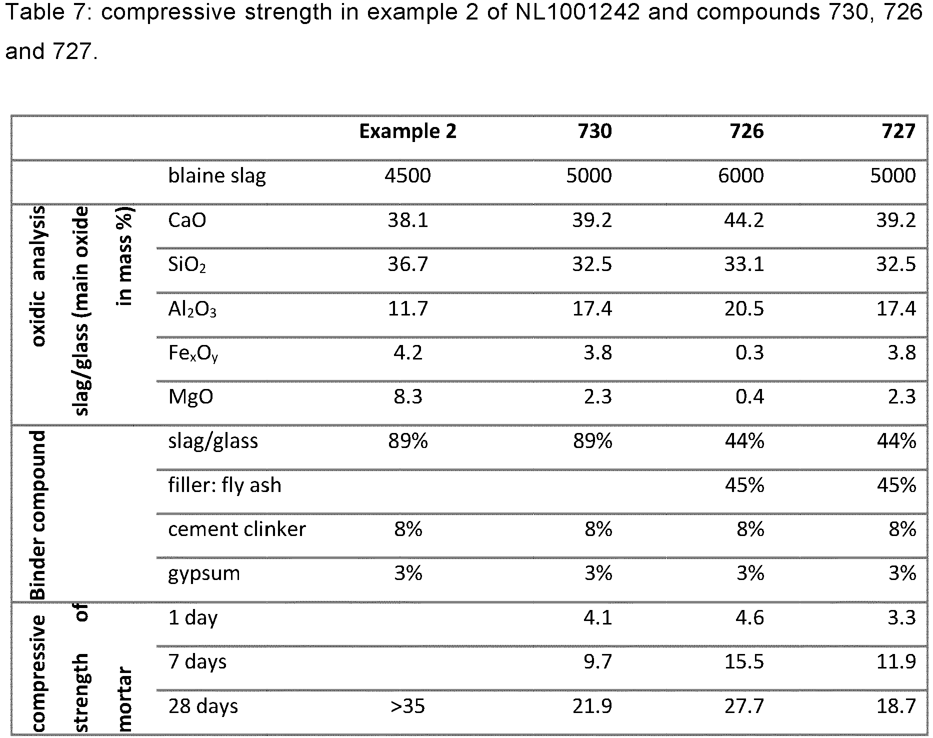

In Table 8 the present inventors find that surprising results can be obtained when sodium sulphate is used as the sulphate component instead of calcium sulphate. The initial strength can be more than doubled.

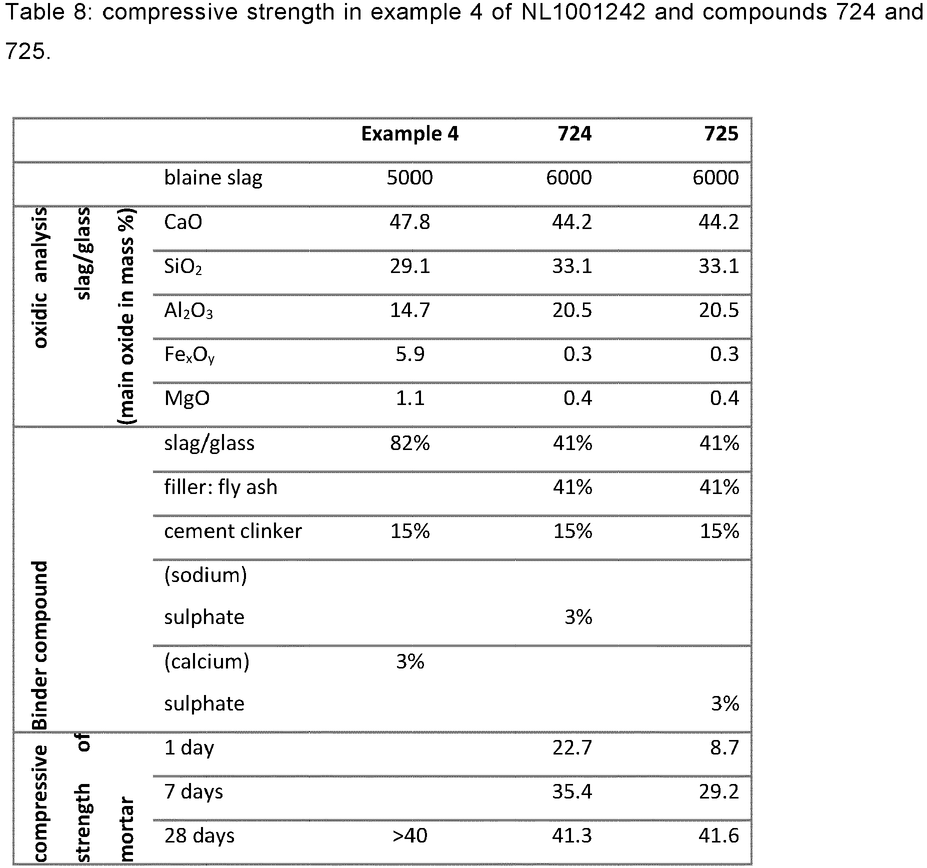

Table 9 shows that replacement of sodium sulphate by calcium sulphate lowers both the initial strength and the final strength. The compound values specified for examples 713 and 726 correspond to one another as far as the oxidic analysis is concerned. The same holds for examples 715 and 727.

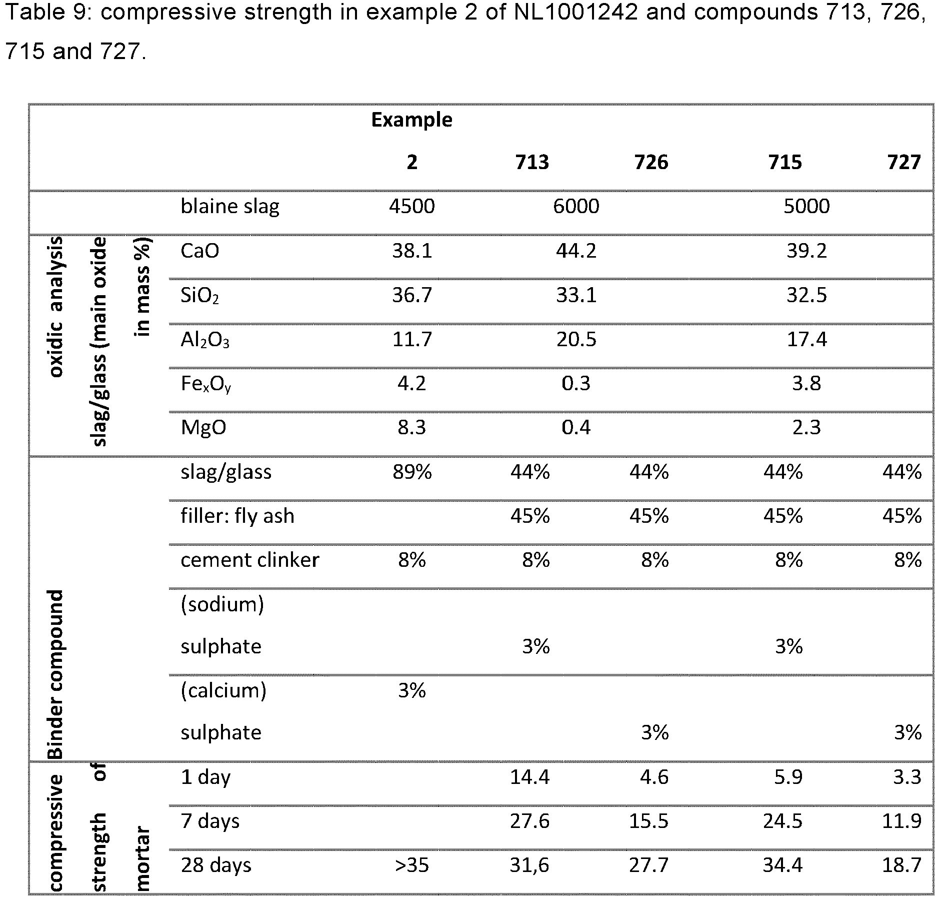

The present inventors also concluded (see Table 10) that the strength development can be geared to the strength development required in the application by using other sulphate/clinker ratios.

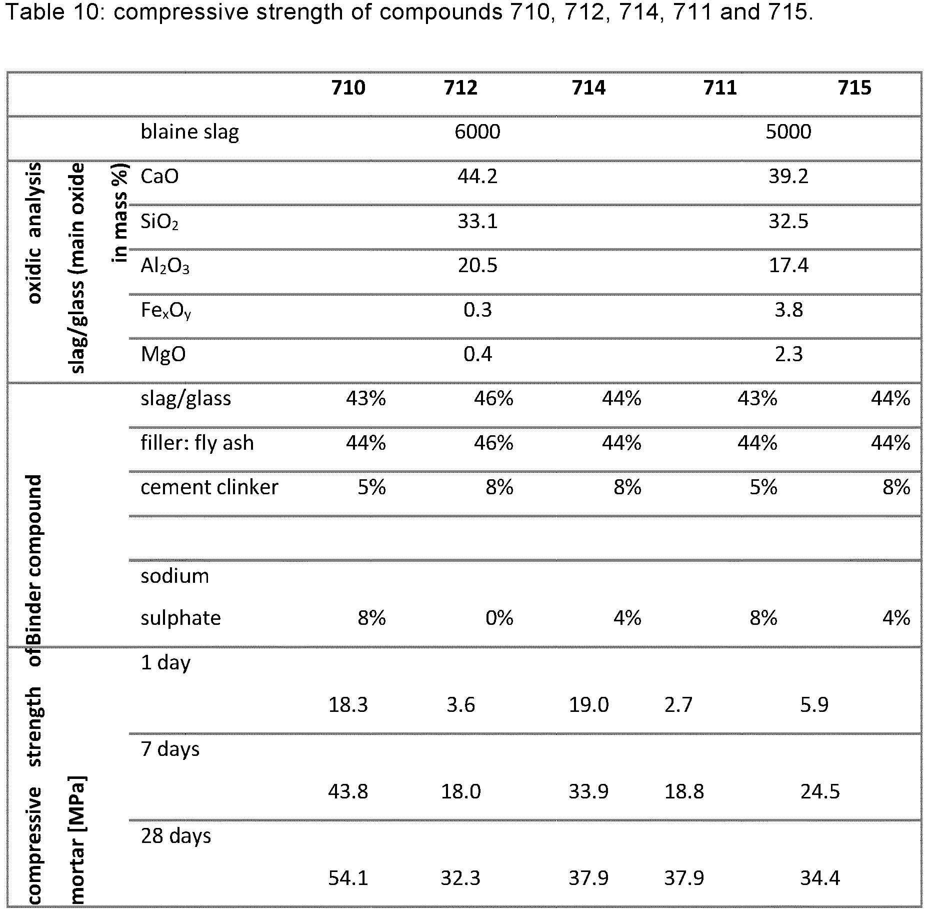

## Claims

1. A method for producing a cement compound, which cement compound comprises a reactive glass compound, filler, alkaline activator and optionally additives, said reactive glass compound comprising at least 35 wt% CaO, at least 25 wt% SiO₂ and at least 10 wt% Al₂O₃, and optionally other oxides, which method comprises
i) production of the reactive glass compound from one or more raw materials, and
ii) mixing of the reactive glass compound with at least a filler and an alkaline activator to obtain said cement compound,
**characterised in that** step i) comprises a number of sub-steps:
a) providing one or more raw materials, comprising predominantly secondary raw materials;
b) thermally treating the one or more raw materials to obtain a reactive glass compound;
c) optionally calcining the raw materials;
**characterized in that** said cement compound comprises 10-70 wt% reactive glass compound, 10-70 wt% filler, 1-20 wt% alkaline activator and optionally 0,5-10 wt% additives, said wt% being based on the total weight of said cement compound, said cement compound having a compressive strength of at least 30 MPa, measured according to EN197, after 28 days' hardening, wherein in step a) one or more corrective substances may be added to the raw materials, wherein the alkaline activator is selected from at least one of Na₂CO₃, K₂CO₃, Na₂SO₄ and K₂SO₄ in combination with at least one of Ca(OH)₂, CEM I, Ba(OH)₂ and belite cement, after which step ii) is carried out.

2. A method according to claim 1, wherein the one or more corrective substances are selected from the group consisting of calcium oxides, calcium carbonates, silicon oxides and aluminium oxides.

3. A method according to claim 1 or 2, wherein solid fuel is used as the fuel for carrying out step i), in particular organic solid fuel, more in particular brown coal, pit coal or charcoal.

4. A method according to one or more of the preceding claims 1-3, wherein the thermal treatment in sub-step b) is concluded with the thermal quenching of the reactive glass compound.

5. A method according to one or more of the preceding claims 1-4, further comprising the mixing of the cement compound with water, wherein the alkaline activator is optionally added only after the mixing of the reactive glass compound, the filler and optional additives.

6. A method according to any one of the preceding claims, wherein the reactive glass compound comprises 35-50 wt% CaO, 25-45 wt% SiO₂ and 10-25 wt% Al₂O₃, and optionally other oxides, preferably 40-45 wt% CaO, 28-35 wt% SiO₂ and 13-20 wt% Al₂O₃, said wt% being based on the total weight of said reactive glass compound.

7. A method according to any one of the preceding claims, wherein the weight of the one or more secondary raw materials, from which the reactive glass compound is obtained, is at least half of the total mass of the glass compound.

8. A method according to any one of the preceding claims, wherein the one or more secondary raw materials are selected from the group consisting of ashes, including fly ash and soil ash released in the combustion of coal, wood, biomass, rice waste, paper sludge, waste; substances released in recycling concrete and concrete products, cement-bound fibre plates, glass wool, rockwool; filter substances from rock processing, cement production or lime production; residual substances from the metal industry, in particular slag, more in particular blast-furnace slag; residual substances from the paper industry; residual substances from (drinking or sewage) water purification; thermally treated soil or sludge; residual substances from the recovery of primary raw materials such as bauxite, brick clay and corundum; or mixtures thereof.

9. A method according to one or more of the preceding claims, wherein the additive is selected from the group consisting of Ca(OH)₂, Ba(OH)₂, CaCb; BaCh, polyphosphate and tartrate, or combinations thereof.

10. A method according to any one of the preceding claims, wherein the filler is selected from the group consisting of filter substances; fly ash, in particular pulverised coal fly ash; microsilica; crushing waste and stone powder; thermally activated clay or sludge; residual substances from the metal industry, in particular slag, more in particular blast-furnace slag; and pozzolana, or a combination hereof, especially wherein the filler and the one or more secondary raw materials have the same source.

## Patentansprüche

1. Verfahren zur Herstellung einer Zementverbindung, wobei die Zementverbindung eine reaktionsfähige Glasverbindung, Füllstoff, alkalischen Aktivator und gegebenenfalls Zusatzstoffe umfasst, wobei die reaktionsfähige Glasverbindung mindestens 35 Gew.-% CaO, mindestens 25 Gew.-% SiO₂ und mindestens 10 Gew.-% Al₂O₃ und gegebenenfalls weitere Oxide umfasst, wobei das Verfahren umfasst
i) Herstellen der reaktionsfähigen Glasverbindung aus einem oder mehreren Ausgangsmaterialien, und
ii) Mischen der reaktionsfähigen Glasverbindung mit mindestens einem Füllstoff und einem alkalischen Aktivator zum Erhalten der Zementverbindung,
**dadurch gekennzeichnet, dass** Schritt i) mehrere Teilschritte umfasst:
a) Bereitstellen von einem oder mehreren Ausgangsmaterialien, das bzw. die vorrangig Sekundärrohstoffe umfasst bzw. umfassen;
b) Wärmebehandeln des einen oder der mehreren Ausgangsmaterialien zum Erhalten einer reaktionsfähigen Glasverbindung;
c) gegebenenfalls Brennen der Ausgangsmaterialien;
**dadurch gekennzeichnet, dass** die Zementverbindung 10 bis 70 Gew.-% reaktionsfähige Glasverbindung, 10 bis 70 Gew.-% Füllstoff, 1 bis 20 Gew.-% alkalischen Aktivator und gegebenenfalls 0,5 bis 10 Gew.-% Zusatzstoffe umfasst, wobei die Gew.-% auf dem Gesamtgewicht der Zementverbindung basieren, wobei die Zementverbindung eine nach EN 197 ermittelte Druckfestigkeit nach 28 Tagen Erhärtung von mindestens 30 MPa aufweist, wobei in Schritt a) den Ausgangsmaterialien ein oder mehrere Korrekturstoffe zugegeben werden kann bzw. können, wobei der alkalische Aktivator ausgewählt wird aus Na₂CO₃, K₂CO₃, Na₂SO₄ und/oder K₂SO₄ in Verbindung mit Ca(OH)₂, CEM I, Ba(OH)₂ und/oder Belitzement, woraufhin Schritt ii) durchgeführt wird.

2. Verfahren nach Anspruch 1, wobei der eine oder die mehreren Korrekturstoffe aus der Gruppe bestehend aus Calciumoxiden, Calciumcarbonaten, Siliciumoxiden und Aluminiumoxiden ausgewählt werden.

3. Verfahren nach Anspruch 1 oder 2, wobei als Brennstoff zum Durchführen von Schritt i) fester Brennstoff, bevorzugt organischer fester Brennstoff, bevorzugter Braunkohle, Steinkohle oder Holzkohle verwendet wird.

4. Verfahren nach einem oder mehreren der vorangehenden Ansprüche 1 bis 3, wobei die Wärmebehandlung in Teilschritt b) mit dem Abschrecken der reaktionsfähigen Glasverbindung abgeschlossen wird.

5. Verfahren nach einem oder mehreren der vorangehenden Ansprüche 1 bis 4, ferner umfassend das Mischen der Zementverbindung mit Wasser, wobei der alkalische Aktivator optional erst nach dem Mischen der reaktionsfähigen Glasverbindung, des Füllstoffs und optionaler Zusatzstoffe zugegeben wird.

6. Verfahren nach einem der vorhergehenden Ansprüche, wobei die reaktionsfähige Glasverbindung 35 bis 50 Gew.-% CaO, 25 bis 45 Gew.-% SiO₂ und 10 bis 25 Gew.-% Al₂O₃ sowie gegebenenfalls weitere Oxide, vorzugsweise 40 bis 45 Gew.-% CaO, 28 bis 35 Gew.-% SiO₂ und 13 bis 20 Gew.-% Al₂O₃ umfasst, wobei die Gew.-% auf dem Gesamtgewicht der reaktionsfähigen Glasverbindung basieren.

7. Verfahren nach einem der vorhergehenden Ansprüche, wobei das Gewicht des einen Sekundärrohstoffs oder der mehreren Sekundärrohstoffe, aus dem bzw. denen die reaktionsfähige Glasverbindung erhalten wird, zumindest die Hälfte der Gesamtmasse der Glasverbindung beträgt.

8. Verfahren nach einem der vorhergehenden Ansprüche, wobei der eine oder die mehreren Sekundärrohstoff(e) aus der Gruppe ausgewählt sind, die aus Asche, einschließlich Flugasche und Bodenasche, die bei der Verbrennung von Kohle, Holz, Biomasse, Reishülsen, Papierschlamm, Abfällen freigesetzt wird; Stoffen, die beim Recycling von Beton und Betonprodukten, zementgebundenen Faserplatten, Glaswolle, Steinwolle freigesetzt werden; Filterstoffen aus der Steinverarbeitung, Zementproduktion oder Kalkproduktion; Reststoffen aus der Metallindustrie, bevorzugt Schlacke, bevorzugter Hochofenschlacke; Reststoffen aus der Papierindustrie; Reststoffen aus der Wasserreinigung (Trink- oder Abwasser); wärmebehandeltem Boden oder Schlamm; Reststoffen aus der Rückgewinnung von Primärrohstoffen wie Bauxit, Ziegelton und Korund; oder Mischungen daraus besteht.

9. Verfahren nach einem oder mehreren der vorhergehenden Ansprüche, wobei der Zusatzstoff aus der Gruppe bestehend aus Ca(OH)₂, Ba(OH)₂, CaCl₂, BaCl₂, Polyphosphat und Tartrat oder Kombinationen daraus ausgewählt wird.

10. Verfahren nach einem der vorhergehenden Ansprüche, wobei der Füllstoff aus der Gruppe ausgewählt ist, die aus Filterstoffen; Flugasche, insbesondere pulverisierte Kohleflugasche; Mikrokieselerde; Abfällen aus der Zerkleinerung und Steinpulver; thermisch aktiviertem Ton oder Schlamm; Reststoffen aus der Metallindustrie, bevorzugt Schlacke, bevorzugter Hochofenschlacke; sowie Puzzolanen oder einer Kombination davon besteht, wobei insbesondere der Füllstoff und der eine oder die mehreren Sekundärrohstoff(e) aus derselben Quelle stammen.

## Revendications

1. Procédé de production d'un composé de ciment, lequel composé de ciment comprend un composé de verre réactif, une charge, un activateur alcalin et facultativement des additifs, ledit composé de verre réactif comprenant au moins 35% en poids de CaO, au moins 25% en poids de SiO₂ et au moins 10% en poids d'Al₂O₃, et facultativement d'autres oxydes, lequel procédé comprend
i) la production du composé de verre réactif à partir d'une ou de plusieurs matière(s) première(s), et
ii) le mélange du composé de verre réactif avec au moins une charge et un activateur alcalin pour obtenir ledit composé de ciment,
**caractérisé en ce que** l'étape i) comprend un certain nombre de sous-étapes consistant à :
a) fournir une ou plusieurs matière(s) première(s), comprenant majoritairement des matières premières secondaires ;
b) traiter thermiquement la ou les plusieurs matière(s) première(s) pour obtenir un composé de verre réactif ;
c) facultativement calciner les matières premières ;
**caractérisé en ce que** ledit composé de ciment comprend 10 à 70% en poids d'un composé de verre réactif, 10 à 70% en poids de charge, 1 à 20% en poids d'un activateur alcalin et facultativement 0,5 à 10% en poids d'additifs, lesdits % en poids étant basés sur le poids total dudit composé de ciment, ledit composé de ciment ayant une résistance à la compression d'au moins 30 MPa, mesurée selon EN197, après 28 jours de durcissement, où à l'étape a) une ou plusieurs substance(s) corrective(s) peut/peuvent être ajoutée(s) aux matières premières, où l'activateur alcalin est choisi parmi au moins l'un de Na₂CO₃, K₂CO₃, Na₂SO₄ et K₂SO₄ en combinaison avec au moins l'un parmi Ca(OH)₂, CEM I, Ba(OH)₂ et le ciment de bélite, après quoi l'étape ii) est réalisée.

2. Procédé selon la revendication 1, dans lequel la ou les plusieurs substance(s) corrective(s) est/sont choisie(s) dans le groupe constitué d'oxydes de calcium, de carbonates de calcium, d'oxydes de silicium et d'oxydes d'aluminium.

3. Procédé selon la revendication 1 ou 2, dans lequel du combustible solide est utilisé comme combustible pour la réalisation de l'étape i), en particulier du combustible solide organique, plus particulièrement du lignite, du charbon de mine ou du charbon de bois.

4. Procédé selon une ou plusieurs des revendications 1 à 3 précédentes, dans lequel le traitement thermique dans la sous-étape b) est terminé par la trempe thermique du composé de verre réactif.

5. Procédé selon une ou plusieurs des revendications 1 à 4 précédentes, comprenant en outre le mélange du composé de ciment avec de l'eau, où l'activateur alcalin est facultativement ajouté uniquement après le mélange du composé de verre réactif, de la charge et d'additifs facultatifs.

6. Procédé selon l'une quelconque des revendications précédentes, dans lequel le composé de verre réactif comprend 35 à 50% en poids de CaO, 25 à 45% en poids de SiO₂ et 10 à 25% en poids d'Al₂O₃, et facultativement d'autres oxydes, de préférence 40 à 45% en poids de CaO, 28 à 35% en poids de SiO₂ et 13 à 20% en poids d'Al₂O₃, lesdits % en poids étant basés sur le poids total dudit composé de verre réactif.

7. Procédé selon l'une quelconque des revendications précédentes, dans lequel le poids de la ou des plusieurs matière(s) première(s) secondaire(s), à partir de laquelle/desquelles le composé de verre réactif est obtenu, représente au moins la moitié de la masse totale du composé de verre.

8. Procédé selon l'une quelconque des revendications précédentes, dans lequel la ou les plusieurs matière(s) première(s) secondaire(s) est/sont choisie(s) dans le groupe constitué par des cendres, y compris des cendres volantes et des cendres du sol libérées lors de la combustion du charbon, du bois, de la biomasse, des déchets de riz, des boues de papier, des déchets ; des substances libérées lors du recyclage de béton et de produits en béton, de plaques de fibres liées au ciment, de la laine de verre, de la laine de roche ; des substances filtrantes provenant du traitement de roche, de la production de ciment ou de la production de chaux ; des substances résiduelles provenant de l'industrie métallique, en particulier des scories, plus particulièrement des scories de haut-fourneau ; des substances résiduelles provenant de l'industrie du papier ; des substances résiduelles provenant de la purification de l'eau (potable ou eaux usées) ; un sol ou une boue traité(e) thermiquement ; des substances résiduelles provenant de la récupération de matières premières primaires telles que la bauxite, l'argile à briques et le corindon ; ou des mélanges de ceux-ci.

9. Procédé selon une ou plusieurs des revendications précédentes, dans lequel l'additif est choisi dans le groupe constitué par Ca(OH)₂, Ba(OH)₂, CaCl₂ ; BaCl₂, polyphosphate et tartrate, ou des combinaisons de ceux-ci.

10. Procédé selon l'une quelconque des revendications précédentes, dans lequel la charge est choisie dans le groupe constitué par des substances filtrantes ; des cendres volantes, en particulier des cendres volantes de charbon pulvérisé ; la microsilice ; des déchets de broyage et la poudre de pierre ; une argile ou boue activée thermiquement ; des substances résiduelles provenant de l'industrie métallique, en particulier des scories, plus particulièrement des scories de haut fourneau ; et la pouzzolane, ou une combinaison de ceux-ci, notamment où la charge et la ou les plusieurs matière(s) première(s) secondaire(s) ont la même source.
